# EUROPÄISCHE PATENTSCHRIFT

(11) **EP 3 918 653 B1**
(45) Veröffentlichungstag und Bekanntmachung des Hinweises auf die Patenterteilung: **19.06.2024**
(21) Anmeldenummer: 20700437.5
(22) Anmeldetag: 08.01.2020
(51) Int. Cl.: F04D 23/00, F04D 29/70, F04F 5/24, H01M 8/04089, H01M 8/04119

(54) **FÖRDERAGGREGAT FÜR EINEN ANODENKREISLAUF EINES BRENNSTOFFZELLEN-SYSTEMS ZUR FÖRDERUNG EINES GASFÖRMIGEN MEDIUMS**
SUPPLYING DEVICE FOR AN ANODE CYCLE OF A FUEL CELL SYSTEM FOR SUPPLYING A GASEOUS FLUID
DISPOSITIF D'ALIMENTATION POUR UN CONDUIT ANODIQUE D'UN SYSTÈME DE PILES À COMBUSTIBLE POUR L'ALIMENTATION EN FLUIDE GASEUX

(30) Priorität: 30.01.2019 DE 102019201183
(43) Veröffentlichungstag der Anmeldung: 08.12.2021
(73) Patentinhaber: Robert Bosch GmbH, 70442 Stuttgart (DE)
(72) Erfinder: MERZ, Armin, 71384 Weinstadt (DE); HERO, Alexander, 74251 Lehrensteinsfeld (DE)
(86) Internationale Anmeldenummer: PCT/EP2020/050244
(87) Internationale Veröffentlichungsnummer: WO 2020/156764

(56) Entgegenhaltungen:
- DE-A1-102011 114 799
- DE-A1-102012 001 602
- US-A- 2 203 077
- US-A1- 2009 155 102
- US-A1- 2012 315 559

## Beschreibung

### Stand der Technik

Die vorliegende Erfindung betrifft ein Förderaggregat für einen Anodenkreislauf eines Brennstoffzellen-Systems zur Förderung eines gasförmigen Medium, insbesondere Wasserstoff, das insbesondere zur Anwendung in Fahrzeugen mit einem Brennstoffzellenantrieb vorgesehen ist. Ferner betrifft die Erfindung ein Brennstoffzellen-System mit einem solchen Förderaggregat.

Im Fahrzeugbereich spielen neben flüssigen Kraftstoffen in Zukunft auch gasförmige Kraftstoffe eine zunehmende Rolle. Insbesondere bei Fahrzeugen mit Brennstoffzellenantrieb müssen Wasserstoffgasströme gesteuert werden. Die Gasströme werden hierbei nicht mehr diskontinuierlich wie bei der Einspritzung von flüssigem Kraftstoff gesteuert, sondern es wird das Gas aus mindestens einem Hochdrucktank entnommen und über eine Zuströmleitung eines Mitteldruckleitungssystem an das Förderaggregat geleitet. Dieses Förderaggregat führt das Gas über eine Verbindungsleitung eines Niederdruckleitungssystems zu einer Brennstoffzelle.

Aus der DE 10 2011 105 710 B4 ist ein Förderaggregat für ein Brennstoffzellen-System zur Förderung und/oder Rezirkulation eines gasförmigen Mediums bekannt, mit einem Rezirkulationsgebläse und einer von einem Treibstrahl eines unter Druck stehenden gasförmigen Mediums angetriebenen Strahlpumpe, wobei ein Anodenausgang einer Brennstoffzelle mit einem Eingang des Förderaggregats fluidisch verbunden ist und wobei ein Ausgang des Förderaggregats mit einem Anodeneingang der Brennstoffzelle fluidisch verbunden ist.

Aus der DE 10 2014 105 995 A1 ist ein Brennstoffzellen-System zur Förderung und/oder Rezirkulation eines gasförmigen Mediums bekannt, bei der das unter Druck stehende gasförmigen Medium einer Strahlpumpe mittels eines Dosierventils zugeführt wird.

Die DE 10 2012 001602 A1 beschreibt ein Brennstoffzellensystem umfassend eine Strahlpumpe, ein Dosierventil, eine Pumpe, sowei einen Wasserabscheider.

Aus der US 2009/155102 A1 ist eine Fördereinrichtung für ein Brennstoffzellen-system bekannt, wobei die Fördereinrichtung eine Pumpe vom Zentrifugaltsyp, eine Strahlpumpe und Ventile aufweist, wobei alle Komponenten innerhalb bzw. Teil eines gemeinsamen Gehäuses sind.

Die US 2012/315559 A1 beschreibt eine Fördereinrichtung beinhaltend eine Strahlpumpe, welche ein integriertes Dosierventil aufweist, welches die Zufuhr von frischem Wasserstoff aus einem Tank regelt.

DE 10 2011 114799 beschreibt eine Strahlpumpen für einen Anodenkreislauf eines Brennstoffzellensystems, welche zusätzlich Anordnungen in einem Düsenbereich zum Ableiten von Flüssigkeit aufweist.

In der US 2 203 077 A ist eine Fördereinrichtung zum Pumpen von Flüssigkeiten bestehend aus einer Zentrifugalpumpe, einer Strahlpumpe einer Strahlpumpe und einem Ventil in einem gemeinsamen Gehäuse.

Die aus der DE 10 2011 105 710 B4, US 2009/155102 A1, US 2012/315559 A1, DE 10 2011 114799 und der US 2 203 077 A bekannten Förderaggregate und die aus der der DE 10 2014 105 995 A1 und der DE 10 2012 001602 A1 bekannten Brennstoffzellensysteme können jeweils gewisse Nachteile aufweisen. Dabei sind die Komponenten des Förderaggregats, insbesondere das Rezirkulationsgebläses und/oder die Strahlpumpe und/oder das Dosierventil, zumindest teilweise mittels fluidischer Verbindungen in Form von Rohrleitungen und gegebenenfalls einer zusätzlichen Verteilerplatte mit innenliegenden Kanälen miteinander und/oder mit der Brennstoffzelle verbunden. Dabei liegen die Komponenten zumindest teilweise als separate Baugruppen vor, die mittels Rohrleitungen miteinander verbunden sind. Dabei entstehen zum einen viele Strömungsumlenkungen und somit Strömungsverluste, insbesondere in allen drei Dimensionen des Raums. Dadurch wird der Wirkungsgrad des Förderaggregats reduziert. Des Weiteren ist die Verbindung der Komponenten des Förderaggregats durch Rohrleitungen insoweit nachteilig, dass die Rohrleitungen über die Lebensdauer des Förderaggregats, insbesondere bei starken Temperaturschwankungen, zu Dichtigkeitsproblemen führen können, insbesondere bei geschweißten und/oder verschweißten Rohrleitungen. Zum anderen entsteht durch das Anordnen der einzelnen Komponenten als zumindest teilweise separate Baugruppen der Nachteil, dass diese insgesamt eine große Oberfläche im Bezug zum Bauraum und/oder geometrischen Volumen ausbilden. Dadurch wird ein schnelles Auskühlen der Bauteile Rezirkulationsgebläse und/oder Strahlpumpe und/oder Dosierventil begünstigt, insbesondere bei langen Standzeiten des Gesamtfahrzeugs, was zu einer erhöhten Bildung von Eisbrücken und somit einer erhöhten Schädigung der Bauteile und/oder des gesamten Brennstoffzellen-Systems führen kann, was wiederum zu einer verringerten Zuverlässigkeit und/oder Lebensdauer des Förderaggregats und/oder des Brennstoffzellen-Systems führen kann. Ein weiterer Nachteil ist zudem eine schlechte Kaltstarteigenschaft des Förderaggregats und/oder des Brennstoffzellen-Systems und/oder des Gesamtfahrzeugs, da Heizenergie und/oder Wärmeenergie jeweils einzeln in die Bauteile Rezirkulationsgebläse und/oder Strahlpumpe und/oder Dosierventil eingebracht werden muss, wobei die Bauteile voneinander entfernt angeordnet sind und somit jedes Bauteil separat aufgeheizt werden muss, insbesondere bei Temperaturen unter 0° Celsius, um mögliche Eisbrücken zu eliminieren.

### Offenbarung der Erfindung

### Vorteile der Erfindung

Erfindungsgemäß wird ein Förderaggregat für ein Brennstoffzellen-System vorgeschlagen, zum Fördern und/oder Rezirkulieren eines gasförmigen Mediums, insbesondere Wasserstoff, wobei der Wasserstoff im Folgenden als H₂ bezeichnet wird.

Bezugnehmend auf Anspruch 1 ist das Förderaggregat derart ausgebildet, dass das Förderaggregat zusätzlich zum Bauteil Rezirkulationsgebläse als weitere Bauteile eine Strahlpumpe, ein Dosierventil und einen Abscheider aufweist, wobei die Strömungskonturen der Bauteile für das gasförmige Medium zumindest nahezu vollständig in einem gemeinsamen Gehäuse angeordnet sind. Zudem weist weist das Rezirkulationsgebläse ein Verdichterrad mit einem umlaufenden äußeren Begrenzungsring auf, der rotationssymmetrisch zu einer Drehachse des Verdichterrads verläuft und wobei sich auf der der Drehachse abgewandten Seite des Verdichterrads im Gehäuse des Förderaggregats ein zumindest teilweise gekapselter Abscheideraum befindet. Auf diese Weise kann zum einen der Vorteil erzielt werden, dass eine zumindest teilweise Kapselung mindestens eines Seitenkanals und/oder einer Förderzelle zu einem äußeren Bereich im Gehäuse, insbesondere zu dem Abscheideraum, erfolgt. Somit lässt sich der Wirkungsgrad des Rezirkulationsgebläses und somit des Förderaggregats verbessern.

Auf diese Weise kann der Vorteil erzielt werden, dass eine direkte und möglichst kurze Strömungsleitung zwischen den Komponenten des Förderaggregats hergestellt werden kann, insbesondere zwischen dem Rezirkulationsgebläse und/oder der Strahlpumpe und/oder dem Dosierventil und/oder dem Abscheider. Des Weiteren kann die Anzahl der Strömungsumlenkungen und/oder Änderung einer Strömungsrichtung des gasförmigen Mediums in dem Förderaggregat auf eine möglichst geringe Anzahl reduziert werden, da die Bauteile in dem gemeinsamen Gehäuse und somit in geringer Entfernung zueinander positioniert sind. Dabei werden die Einströmöffnungen und die Ausströmöffnungen der Bauteile Rezirkulationsgebläse und/oder Strahlpumpe und/oder Dosierventil und/oder Abscheider zueinander im gemeinsamen Gehäuse so zueinander angeordnet, dass sich eine möglichst geringe Länge der Strömungsverbindungen und möglichst wenige Strömungsumlenkungen zwischen den Bauteile ergeben. Die Strömungskonturen befinden sich dabei zumindest nahezu vollständig im gemeinsamen Gehäuse und es kann auf externe Rohrleitungen und/oder externe Verteilerplatten zumindest nahezu vollständig verzichtet werden. Somit lassen sich zum einen Undichtigkeiten aufgrund eines undichten Rohrleitungssystems reduzieren, was die Ausfallwahrscheinlichkeit des Förderaggregats und/oder Brennstoffzellen-Systems verringert. Zum anderen lassen sich somit die Reibungsverluste und oder Strömungsverluste, insbesondere aufgrund von Leitungslängen und der Anzahl von Umlenkungen, im Förderaggregat und/oder Brennstoffzellen-System verringern, wodurch sich der Wirkungsgrad des Förderaggregats und/oder des Brennstoffzellen-Systems verbessern lässt.

Weiterhin lässt sich ist in vorteilhafter Weise durch die Anordnung der Strömungskonturen der Bauteile und/oder der Bauteile zumindest nahezu vollständig in dem gemeinsamen Gehäuse gewährleistet, dass eine Gesamtoberfläche des Förderaggregats, welches insbesondere die Bauteile Rezirkulationsgebläse, Strahlpumpe, Dosierventil und Abscheider umfasst, im Bezug zum Bauraum und/oder geometrischen Volumen verkleinert werden kann. Somit lässt sich der Vorteil erzielen, dass ein schnelles Auskühlen der Bauteile Rezirkulationsgebläse und/oder Strahlpumpe und/oder Dosierventil und/oder Abscheider, insbesondere bei langen Standzeiten des Gesamtfahrzeugs, verhindert wird, was zu einer Reduzierung und/oder Vermeidung der Bildung von Eisbrücken führt. Dabei wird in vorteilhafter Weise der Effekt genutzt, dass die Bauteile Rezirkulationsgebläse und/oder Strahlpumpe und/oder Dosierventil und/oder Abscheider, im Betrieb Wärme erzeugen, beispielsweise durch die elektrische Aktorik und/oder durch magnetische Aktorik, wobei diese Wärme zur Vermeidung der Auskühlungen aller Bauteile im gemeinsamen Gehäuse nutzen lässt. Weiterhin lässt sich durch die Anordnung der Bauteile im gemeinsamen Gehäuse bei einem insgesamt verkleinerten Volumen des Förderaggregats eine verbesserte Kaltstartfähigkeit des Förderaggregats und/oder des Brennstoffzellen-Systems erzielen, insbesondere bei langen Standzeiten des Gesamtfahrzeugs, da weniger Masse aufgeheizt werden muss und da die vorhandene Wärme einzelner Bauteile genutzt werden kann, um das gemeinschaftliche Gehäuse zu erhitzen. Dabei kann zudem die Ausfallwahrscheinlichkeit des Förderaggregats und/oder des Brennstoffzellen-Systems reduziert werden, wobei die Lebensdauer erhöht werden kann. Zudem ist vorteilhaft, dass der Abscheider nicht als weiteres separates Bauteil im Anodenkreislauf mit den Bauteilen Rezirkulationsgebläse und/oder Strahlpumpe und/oder Dosierventil mittels externer Rohrleitungen und/oder externer Verteilerplatten verbunden werden muss.

Durch die in den Unteransprüchen aufgeführten Maßnahmen sind vorteilhafte Weiterbildungen der im Anspruch 1 angegebenen Fördereinrichtung möglich. Die Unteransprüche betreffen bevorzugte Weiterbildungen der Erfindung.

Auf diese Weise kann der Vorteil erzielt werden, dass die schweren Bestandteile, die aus einem Verdichterraum des Rezirkulationsgebläses in den Abscheideraum, der sich insbesondere zwischen dem äußeren Begrenzungsring des Verdichterrads und dem Gehäuses befindet, abgeführt werden und/oder weiter heraus aus dem Gehäuse des Rezirkulationsgebläses und dem Brennstoffzellen-System abgeführt werden können. Dies bietet den Vorteil, dass eine Erhöhung des Wirkungsgrads des Rezirkulationsgebläses und/oder des Brennstoffzellen-Systems über die gesamte Lebensdauer beibehalten werden kann, da der Anteil und/oder die Konzentration an H₂ im gasförmigen Medium erhöht werden kann, während der Anteil und/oder die Konzentration der schweren Bestandteile, insbesondere H₂O und/oder N₂ im gasförmigen Medium verringert werden kann. Weiterhin wird der Vorteil erzielt, dass durch das Herausleiten der schweren Bestandteile aus dem Bereich des Verdichterraums verhindert wird, dass sich im abgeschalteten Zustand des Brennstoffzellen-Systems und bei niedrigen Umgebungstemperaturen sogenannte Eisbrücken zwischen den beweglichen Teilen, insbesondere dem Verdichterrad und dem Gehäuse, bilden.

Derartige Eisbrücken würden ein Starten des Brennstoffzellen-Systems, insbesondere des Rezirkulationsgebläses erschweren oder vollständig verhindern. Somit kann durch die erfindungsgemäße Ausgestaltung des Rezirkulationsgebläses eine Schädigung der rotierenden Teile des Rezirkulationsgebläses und/oder eines Antriebs, insbesondere eines elektrischen Antriebs, aufgrund von Eisbrückenbildung, verhindert werden. Dies führt zu einer höheren Zuverlässigkeit des Brennstoffzellen-Systems und/oder des Fahrzeugs. Durch die Nutzung des Zentrifugalprinzips zum Herausleiten der schweren Bestandteile kann der Vorteil erzielt werden, dass der Abscheideprozess derart verbessert wird, so dass die Bestandteile H₂O und N₂ zumindest nahezu vollständig vom Medium, insbesondere vom H₂ abgeschieden werden können. Dadurch kann sichergestellt werden, dass ein möglichst hoher Anteil an H₂ zur Brennstoffzelle, zurückströmt, wodurch zum einen der Wirkungsgrad und/oder die Leistung einer Brennstoffzelle erhöht werden kann und zum anderen weniger H₂ dem Anodenkreislauf von außen zugeführt werden muss.

Weiterhin lässt sich der Vorteil erzielen, dass zum Trennen der Bestandteile H₂O und N₂ vom Bestandteil H₂ keine zusätzliche Energie und/oder nur eine geringe Menge an Energie zur Verfügung gestellt werden muss, insbesondere vom Brennstoffzellen-System und/oder vom übergeordneten System Fahrzeug. Eine weitere Einleitung von Energie, insbesondere von kinetischer Energie, in das Medium ist somit nicht mehr notwendig, um eine optimale Effizienz des Abscheideprozesses durch das Rezirkulationsgebläse mittels des Zentrifugalprinzips bewirken zu können. Dadurch kann der Wirkungsgrad des Brennstoffzellen-Systems erhöht werden und die Betriebskosten können reduziert werden.

Gemäß einer vorteilhaften Weiterbildung des Förderaggregats können die Bestandteile H₂O und/oder N₂ des gasförmigen Mediums vom Rezirkulationsgebläse in den Abscheider mittels des Zentrifugalprinzips und/oder des Gravitationsprinzips und/oder eines Druckunterschieds geleitet werden. Auf diese Weise lässt sich der Vorteil erzielen, dass kein weiteres Bauteil, wie beispielsweise eine Pumpe, verwendet werden muss, um die Bestandteile H₂O und/oder N₂ vom Rezirkulationsgebläse in den Abscheider zu fördern. Es lässt sich einzig mittels der schon vorhandene Zentrifugalkraft und/oder Gravitationskraft und/oder des erhöhten Drucks, der ohnehin schon im Rezirkulationsgebläse vorherrscht, insbesondere um das gasförmige Medium zu fördern, ein Synergieeffekt nutzen, um die Bestandteile H₂O und/oder N₂ vom Rezirkulationsgebläse in den Abscheider zu fördern. Des Weiteren kann der Abscheideprozess und/oder weitere Prozesse im Abscheider mittels des eingeleiteten Drucks und/oder der Energie aus dem Rezirkulationsgebläse weiter verbessern und/oder der Wirkungsgrad lässt sich erhöhen. Auf diese Weise kann der Wirkungsgrad des Rezirkulationsgebläses und/oder des Abscheiders und/oder des gesamten Brennstoffzellen-Systems verbessert werden.

Gemäß einer besonders vorteilhaften Weiterbildung des Förderaggregats sind das Rezirkulationsgebläse und die Strahlpumpe derart zueinander im gemeinsamen Gehäuse angeordnet, dass die Drehachse des Verdichterrads des Rezirkulationsgebläses zumindest annähernd senkrecht zu einer Längsachse der Strahlpumpe verläuft. Auf diese Weise kann der Vorteil erzielt werden, dass die Strömungsverluste und/oder Druckverluste innerhalb des Förderaggregats aufgrund der Länge der Strömungsleitungen und/oder der Anzahl der Strömungsumlenkungen reduziert werden können. Es ist zudem weiterhin vorteilhaft, dass die Strömungsführung im Rezirkulationsgebläse und in der Strahlpumpe in parallelen Ebenen verläuft, wobei dieser vorteilhafte Effekt dadurch verbessert werden kann, dass das gasförmige Medium beim Ausströmen aus dem Rezirkulationsgebläse, bei dem das gasförmige Medium insbesondere im Rezirkulationsgebläse mit einer Drall-Energie beaufschlagt wird, vorteilhaft in einen Ansaugbereich der Strahlpumpe eingeleitet wird, dass ein Impulsübertrag und/oder Strahlpumpeneffekt in diesem Bereich und/oder im Bereich eines Mischrohrs der Strahlpumpe verbessert werden kann. Zudem wird eine Strömungsumlenkung des gasförmigen Mediums weiterhin reduziert, wodurch sich die Strömungsverluste innerhalb des Förderaggregats weiter reduzieren lassen. Dadurch kann der Wirkungsgrad des Förderaggregats, insbesondere bei nahezu allen Betriebspunkten und/oder Druckverhältnissen des Brennstoffzellen-Systems, verbessert werden und der Energieaufwand zum Betreiben des Förderaggregats kann reduziert werden. Zudem kann mittels der Anordnung der Bauteile Rezirkulationsgebläse und Strahlpumpe zueinander eine kompakte Bauform des Förderaggregats herbeigeführt werden, so dass der Vorteil erzielt werden kann, dass das Förderaggregat weniger Bauraum, insbesondere im Gesamtfahrzeug, benötigt.

Des Weiteren lässt sich durch die erfindungsgemäße Ausgestaltung des Förderaggregats die benötigte Anzahl an Bauteilen für die Montage des Förderaggregats reduzieren, was wiederum zu einer Kostenersparnis des Förderaggregats führt. Weiterhin wird die Wahrscheinlichkeit eines Montagefehlers aufgrund von fehlerhaft zueinander ausgerichteten Komponenten des Förderaggregats reduziert wird, was wiederum die Ausfallwahrscheinlichkeit des Förderaggregats im Betrieb reduziert.

Gemäß einer besonders vorteilhaften Ausgestaltung des Förderaggregats ist der Abscheider, insbesondere ein Sammelbehälter des Abscheiders, zumindest mittelbar fluidisch mit dem Verdichterraum und/oder dem Abscheideraum des Rezirkulationsgebläse verbunden ist, wobei die Verbindung mittels eines zumindest annähernd senkrecht zur Drehachse verlaufenden Abführungs-Kanals erfolgt. Auf diese Weise kann der Vorteil erzielt werden, dass die schweren Bestandteile des gasförmigen Mediums, insbesondere H2O und/oder N2, um direkt vom dem Verdichterraum und/oder dem Abscheideraum des Rezirkulationsgebläse in den Sammelbehälter abgeleitet werden können, ohne dass sich eine weitere Komponente und/oder ein externes Rohrleitungssystem und/oder eine externe Verteilerplatte zwischen diesen befinden. Auf diese Weise lassen sich die Strömungsverluste zwischen dem Sammelbehälter des Abscheider und dem Verdichterraum und/oder dem Abscheideraum des Rezirkulationsgebläses verringern. Zudem wird die benötigte Energie in Form eines Druckgefälles oder zur Erzeugung eines Maßenstroms zum Ableiten der schweren Bestandteile aus dem Rezirkulationsgebläse in den Abscheider reduziert da die Strömungsverluste reduziert werden können und daher nahezu die schon vorhandene Druckenergie und/oder Beschleunigungsenergie aus dem Rezirkulationsgebläse ausreicht. Weiterhin vorteilhaft ist, dass diese Verbindung mittels des annähernd senkrecht zur Drehachse verlaufenden Abführungs-Kanals erfolgt. Auf diese Weise kann sichergestellt werden, dass die aus der Rotation des Verdichterrads generierte Zentrifugalkraft, die insbesondere auch senkrecht zur Drehachse wirkt, den maximalen Effekt und mit ihrem bestmöglichen Wirkungsgrad auf die schweren Bestandteile wirken kann, insbesondere beim Abführen dieser über den Abführungs-Kanal. Somit kann der Wirkungsgrad des Förderaggregats und/oder des Rezirkulationsgebläses und/oder des Abscheiders verbessert werden.

Gemäß einer vorteilhaften Weiterbildung ist der Abführungs-Kanal im bestimmungsgemäßen Gebrauch, in einer niedrigen geodätischen Höhe am Rezirkulationsgebläse, insbesondere am Abscheideraum, angeordnet. Zudem kann eine Ablaufbohrung in einer im bestimmungsgemäßen Gebrauch, niedrigen geodätischen Höhe in dem Sammelbehälter angeordnet sein. Auf diese Weise kann der Vorteil erzielt werden, dass sich die Gravitationskraft nutzen lässt, um die schweren Bestandteile aus dem Abscheideraum und/oder aus dem Sammelbehälter abzuleiten. Dabei kann auch bei einem reduzierten Druckniveau im Abscheideraum und/oder Sammelbehälter dafür gesorgt werden, dass die schweren Bestandteile zumindest nahezu ausschließlich mittels der Gravitationskraft aus den Bauteilen und somit aus dem Förderaggregat und/oder aus dem Brennstoffzellen-System abgeleitet werden können. Zudem ist es möglich, dass der Sammelbehälter des Abscheiders bei der erfindungsgemäßen Anordnung der Ablaufbohrung zumindest nahezu vollständig geleert werden kann und somit die schweren Bestandteile mittels der in einer niedrigen geodätischen Höhe angeordneten Ablaufbohrung nahezu vollständig abgeleitet werden können. Somit lässt sich der Abscheidegrad der nicht erwünschten schweren Bestandteile verbessern, wodurch sich der Wirkungsgrad des Rezirkulationsgebläses und/oder des Abscheiders und/oder des Brennstoffzellen-Systems verbessern lässt.

Gemäß einer besonders vorteilhaften Weiterbildung weist der Sammelbehälter die Ablaufbohrung auf, wobei ein Ablassen von H₂O und/oder N₂ aus dem Sammelbehälter über die Ablaufbohrung mittels eines Abführventils gesteuert werden kann. Darüber hinaus kann ausschließlich mittels des Abführventils ein Ablassen von H₂O aus dem gesamten Anodenkreislauf erfolgt. Weiterhin kann ausschließlich mittels des Abführventils ein Ablassen von N₂ und/oder H₂, aus dem gesamten Anodenkreislauf erfolgt. Auf diese Weise lässt sich je nach Betriebszustand des Brennstoffzellen-Systems und/oder des Förderaggregats und/oder des Rezirkulationgebläses steuern, wann und wieviel des sich im Sammelbehälter und/oder im gesamten Anodenkreislauf vorhandenen Mediums, insbesondere der schweren Bestandteile wie H₂O und/oder N₂, mittels des Abführventils abgelassen werden sollen. Dabei können für die Steuerung des Abführventils heranziehbare Parameter jeweils im Anodenkreislauf und/oder in den einzelnen Komponenten des Anodenkreislaufs, insbesondere der Sammelbehälter, beispielsweise sein: Temperatur, Druck, Anteil an H₂O und/oder N₂ im gasförmigen Medium, Betriebszustand der Brennstoffzelle, Drehzahl des Rezirkulationsgebläses, Volumenstrom, Maßenstrom. Auf diese Weise lässt sich der Wirkungsgrad des Brennstoffzellen-Systems und/oder des Förderaggregats und/oder des Rezirkulationgebläses verbessern und es kann der Anteil an aus dem Anodenkreislauf ausgeschiedenen H₂ reduziert werden, wobei der Anteil an aus dem Anodenkreislauf ausgeschiedenen H₂O und N₂ erhöht werden kann. Zudem kann ein Ablassen der schweren Bestandteile derart erfolgen, dass der Betriebszustand und/oder die Fahrsituation des Gesamtfahrzeugs herangezogen werden kann. Zudem kann jedoch auch das Abführventil die Aufgabe eines Purgeventils erfüllen, bei dem selektiv auch H₂O und/oder N₂ und/oder H₂ aus dem Brennstoffzellen-Systems und/oder des Förderaggregats und/oder des Rezirkulationgebläses erfolgt.

Gemäß einer vorteilhaften Ausgestaltung befindet sich ein Absperrventil in dem Abführungs-Kanal, wobei sich die zumindest mittelbare fluidische Verbindung zwischen dem Rezirkulationsgebläse und dem Abscheider mittels des Absperrventils öffnen oder schließen lässt. Auf diese Weise kann der Vorteil erzielt werden, dass ein verbessertes Ablassen der schweren Bestandteile aus dem Sammelbehälter des Abscheiders erzielt werden kann, indem das Absperrventil je nach Bedarf geöffnet oder geschlossen wird. Dabei kann zum einen das Absperrventil geschlossen bleiben, um zu verhindern, dass bei dem geöffneten Abführventil das gasförmige Medium aus dem Rezirkulationsgebläse über den Abführungs-Kanal in den Sammelbehälter entweicht, wobei insbesondere verhindert wird, dass H₂ entweicht. Zum anderen kann jedoch auch das Absperrventil derart geöffnet werden, so dass ein Druck und/oder Volumenstrom aus dem Rezirkulationsgebläse, insbesondere dem Abscheideraum, zur besseren Entleerung und zum verbesserten Abführen der schweren Bestandteile aus dem Sammelbehälter genutzt werden kann. Auf diese Weise lässt sich der Wirkungsgrad des Abscheider verbessern und/oder der Abscheidegrad von H₂O und/oder N₂ gegenüber dem gasförmigen Medium und/oder H₂ erhöhen, wodurch sich der Wirkungsgrad des gesamten Brennstoffzellen-Systems verbessern lässt.

Gemäß einer besonders vorteilhaften Ausgestaltung sind eine erste Sensorik und/oder eine zweite Sensorik mit einer Steuereinrichtung verbunden, wobei insbesondere die erste Sensorik kontinuierlich Parameter des Abscheiders erfasst und die zweite Sensorik kontinuierlich Parameter des Rezirkulationsgebläses erfasst, wobei die Steuereinrichtung, insbesondere auf Basis der von der jeweiligen Sensorik erfassten Parameter, das Öffnen und Schließen des Abführventils und/oder des Absperrventils steuert. Auf diese Weise kann der Vorteil erzielt werden, dass mittels der Ansteuerung, insbesondere des Öffnens und Schließens, des Abführventils und/oder des Absperrventils auf Basis der von der Sensorik erfassten Daten, möglichst immer dann die schweren Bestandteile aus dem Anodenkreislauf des Brennstoffzellen-Systems und/oder dem Abscheideraum und/oder dem Sammelbehälter herausgeleitet werden können, wenn eine bestimmte Konzentration an schweren Bestandteilen im gasförmigen Medium festgestellt wird mittels der Sensorik und/oder wenn ein bestimmter Druckniveau und/oder Temperaturniveau in verschiedenen Bereichen des Brennstoffzellen-Systems festgestellt und/oder überschritten wird, insbesondere im Sammelbehälter oder im Abscheideraum. Zudem kann ein möglicherweise vorhandenes Druckgefälle und/oder eine Strömung und/oder ein Massenstrom aus dem Anodenkreislauf, insbesondere dem Förderaggregat und/oder dem Rezirkulationsgebläse und/oder einer ersten Verbindungsleitung und/oder einer zweiten Verbindungsleitung genutzt werden, um die schweren Bestandteile möglichst effizient und zumindest nahezu ohne zusätzlichen Energieaufwand aus dem Anodenkreislauf herauszuleiten und oder eine entsprechende Separation zu bewirken. Auf diese Weise lässt sich der Wirkungsgrad des Brennstoffzellen-Systems erhöhen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen und/oder Kombinationen der in den Ansprüchen beschrieben Merkmale und/oder Vorteile möglich, die im Rahmen fachmännischen Handelns liegen.

### Kurze Beschreibung der Zeichnung

Anhand der Zeichnung wird die Erfindung nachstehend eingehender beschrieben.

Es zeigt:
- Figur 1: eine schematische Darstellung eines erfindungsgemäßen Brennstoffzellen-Systems mit einem Förderaggregat,
- Figur 2: zeigt eine perspektivische Schnittansicht des Förderaggregats mit einem Rezirkulationsgebläse, einer Strahlpumpe, einem Dosierventil und einem Abscheider in einem Gehäuse,
- Figur 3: zeigt eine in Figur 2 mit A-A bezeichnete perspektivische Schnittansicht des Förderaggregats, insbesondere des Rezirkulationsgebläse und des Abscheiders.
- Figur 4: zeigt einen in Figur 3 mit II bezeichneten Ausschnitt eines Verdichterraums und/oder eines Abscheideraums des Rezirkulationsgebläses,
- Figur 5: einen in Figur 3 mit III bezeichneten Ausschnitt des Abscheiders,
- Figur 6: einen in Figur 5 mit IV bezeichneten Ausschnitt des Rezirkulationsgebläses und des Abscheiders mit einem Abführungs-Kanal.

### Ausführungsformen der Erfindung

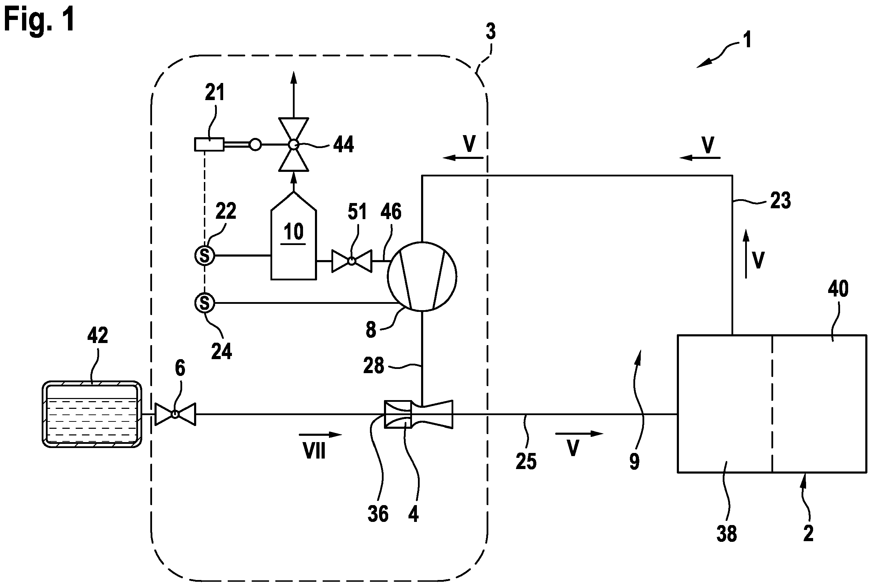

**Fig.** 1 zeigt eine schematische Darstellung eines erfindungsgemäßen Brennstoffzellen-Systems 1 mit einem Förderaggregat 3

Dabei ist in **Fig.** 1 gezeigt, dass das Brennstoffzellen-System 1 eine Brennstoffzelle 2 aufweist, wobei die Brennstoffzelle 2 einen Anodenbereich 38 und einen Kathodenbereich 40 aufweist. Der Anodenbereich 38 der Brennstoffzelle 2 ist dabei mit einem Anodenkreislauf 9 verbunden, wobei der Anodenkreislauf 9 das Förderaggregat 3 und einen Tank 42 aufweist.

Der Anodenbereich 38 ist dabei mittels einer ersten Verbindungsleitung 23 fluidisch mit dem Förderaggregat 3 verbunden wobei das gasförmige Medium in einer Strömungsrichtung V vom Anodenbereich 38 zum Förderaggregat 3 strömt. Dem Förderaggregat wird dabei zusätzlich zum aus dem Anodenbereich 38 der Brennstoffzelle 2 zuströmende Rezirkulat, ein Treibmedium von dem Tank 42 zugeführt. Nach dem erfolgten Durchströmen des Förderaggregats 3 strömt das gasförmige Medium, das aus dem Rezirkulat und dem Treibmedium besteht über eine zweite Verbindungsleitung 25 in einer Strömungsrichtung V zurück zum Anodenbereich 38 der Brennstoffzelle.

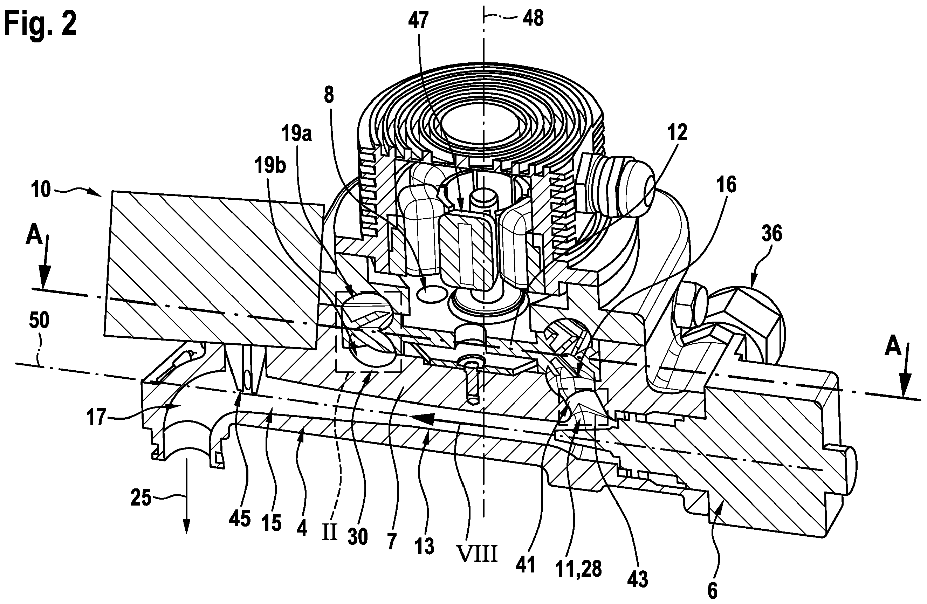

Das Förderaggregat 3 weist ein Rezirkulationsgebläse 8, eine Strahlpumpe 4, ein Dosierventil 6 und einen Abscheider 10 auf. Dabei kann das Rezirkulationsgebläse 8 in einer beispielhaften Ausführungsform fluidisch mittels der ersten Verbindungsleitung 23 mit dem Anodenbereich 38 verbunden sein und/oder mittels einem Abführungskanal 46 fluidisch mit dem Abscheider 10 verbunden sein und/oder mittels eines ersten Zulaufs 28 mit der Strahlpumpe 4 verbunden sein. Des Weiteren kann die Strahlpumpe 4 mittels eines zweiten Zulaufs 36 mit dem Dosierventil 6 verbunden sein. Die Verbindungen können dabei insbesondere als integriert Strömungspfade in einem gemeinsamen Gehäuse 7 (hier nicht gezeigt, siehe **Fig.** 2) ausgeführt sein. Zudem kann sich das Dosierventil 6 zwischen dem Tank 42 und der Strahlpumpe 4 befinden. Das Rezirkulationsgebläse 8 des Förderaggregats 3 fördert dabei ein von der Brennstoffzelle 2 kommendes unverbrauchtes Rezirkulat über den ersten Zulauf 28 in die Strahlpumpe 4. Weiterhin wird ein unter Druck stehender H₂, bei dem es sich insbesondere um eine Treibmedium handelt, in einer Strömungsrichtung VII der Strahlpumpe 4 mittels des Dosierventils 6 zugeführt und strömt über den zweiten Zulauf 36 in die Strahlpumpe 4 ein. Des Weiteren erfolgt eine Abscheidung des Bestandteils H₂O und/oder des Bestandteils N₂ vom gasförmigen Medium im Anodenkreislauf 9 mittels des Rezirkulationsgebläses 8 und/oder mittels des Abscheiders 10. Dabei kann eine Ableitung von H₂O und/oder N₂ aus dem Rezirkulationsgebläse 8 in den Abscheider 10 erfolgen besondere einem Sammelbehälter 31 des Abscheiders 10 befindet. Zudem befindet sich ein Abführventil 44 am Abscheider 10 mittels dem die schweren Bestandteile H₂O und/oder N₂, die vom gasförmigen Medium abgeschieden wurden, aus dem Anodenkreislauf 9 und/oder dem Brennstoffzellen-System 1 abgeleitet werden können. Des Weiteren befindet sich zwischen dem Rezirkulationsgebläse 8 und dem Abscheider 10 ein Absperrventil 51, insbesondere im Bereich des Abführungs-Kanals 46.

Zudem ist in **Fig.** 1 gezeigt, dass eine erste Sensorik 22 und/oder eine zweite Sensorik 24 mit einer Steuereinrichtung 21 verbunden sind, wobei insbesondere die erste Sensorik 22 kontinuierlich Parameter des Abscheiders 10 erfasst und die zweite Sensorik 24 kontinuierlich Parameter des Rezirkulationsgebläses 8 erfasst. Dabei steuert die Steuereinrichtung 21, insbesondere auf Basis der von der Sensorik 22, 24 erfassten Parameter, das Öffnen und Schließen des Abführventils 44 und/oder des Absperrventils 51. Bei den erfassten Parametern kann es sich dabei beispielsweise um Druck, Temperatur, Volumenstrom, Konzentration verschiedener Bestandteile des gasförmigen Mediums, wie beispielsweise H₂, H₂O, N₂ und/oder Schmutzpartikel, handeln. Die Sensorik 22, 24 kann dabei beispielsweise auch direkt am Förderaggregat 3 verbaut sein. Mittels einer entsprechenden und auf der Steuereinrichtung 21 hinterlegten Logik oder Berechnungsmethode, beispielsweise in Form einer CPU mit einer Speichereinheit, kann auf Basis der erfassten Daten eine entsprechende Ansteuerung und/oder Öffnung und/oder Schließung der Ventile 44, 51 derart, dass eine optimale Abführung der schweren Bestandteile aus dem Anodenkreislauf 9 und/oder Brennstoffzellen-System 1 erfolgen kann, wobei der leichte Bestandteile H₂ in möglichst großer Menge wieder in den Anodenkreislauf 9 zurückgeführt werden kann.

**Fig.** 2 zeigt eine perspektivische Schnittansicht des Förderaggregats 3. Dabei weist das Förderaggregat 3 zusätzlich zum Bauteil Rezirkulationsgebläse 8 als weitere Bauteile die Strahlpumpe 4, das Dosierventil 6 und den Abscheider 10 auf, wobei die Strömungskonturen der Bauteile 4, 6, 8, 10 für das gasförmige Medium zumindest nahezu vollständig in dem gemeinsamen Gehäuse 7 angeordnet sind.

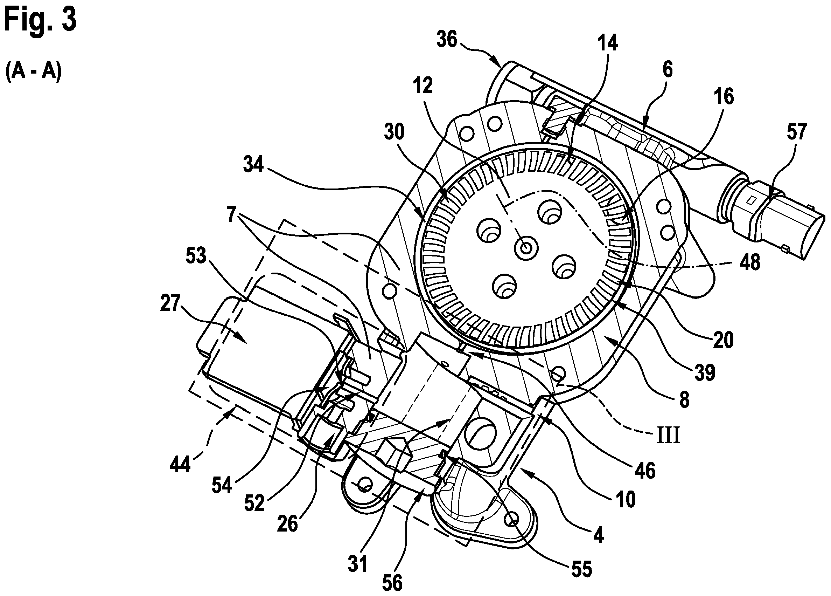

Das Rezirkulationsgebläse 8 weist dabei ein Verdichterrad 12 auf, wobei das Verdichterrad 12 um eine horizontal verlaufenden Drehachse 48 drehbar in dem Gehäuse 7 gelagert ist. Dabei dient ein Antrieb 47, insbesondere ein elektrischer Antrieb 47, als Drehantrieb 47 des Verdichterrades 12 und eine Übertragung des Drehmoments und/oder der Drehbewegung findet vom Antrieb 47 über beispielsweise eine Antriebswelle statt. Weiterhin bildet das Gehäuse 7 eine Gas-Einlassöffnung 14 (hier nicht gezeigt, siehe **Fig.** 3) und eine Gas-Auslassöffnung 16 aus. Dabei sind die Gas-Einlassöffnung 14 und die Gas-Auslassöffnung 16, insbesondere über mindestens einen Seitenkanal 19 fluidisch miteinander verbunden. Des Weiteren weist das Gehäuse 7 im Bereich eines Verdichterraums 30 einen ersten umlaufende Seitenkanal 19a und/oder einen zweiten umlaufenden Seitenkanal 19b auf. Dabei verläuft eine Vielzahl an Förderzellen umlaufend um die Drehachse 48 in dem nahezu vollständig um die Drehachse 48 umlaufenden Verdichterraum 30 des Gehäuses 7 im Verdichterrad 12. In vorteilhafter Weise lässt sich der Antrieb 47, der insbesondere aus einem wärmeleitfähigen Material besteht, erwärmen, was insbesondere bei einer Kaltstartprozedur des Förderaggregats 3 und/oder des Fahrzeugs vorteilhaft ist. Dabei erwärmt sich der Antrieb 47 und überträgt, beispielsweise aufgrund seiner Wärmeleitfähigkeit, die Wärmeenergie auf das Verdichterrad 12 und weitere Komponenten des Förderaggregats 3 und/oder das Gehäuse 7. Bei einem Abschalten des Förderaggregats 3 und/oder des Fahrzeugs, insbesondere über einen längeren Zeitraum und/oder bei niedrigen Umgebungstemperaturen unter dem Gefrierpunkt, gefriert die Flüssigkeit und es bilden sich Eisbrücken aus. Diese Eisbrücken können bei einem Anfahren und/oder Starten und/oder beim Betrieb zur Beschädigung des Förderaggregats 3 und/oder des Brennstoffzellen-Systems 1 führen. Durch das Aufheizen des Antriebs 47 schmelzen die Eisbrücken und die Flüssigkeit wechselt von einem festen zu einem flüssigen Aggregatzustand und kann abgeführt werden. Vorteilhaft ist dabei die Anordnung des Antriebs 47 derart, dass die Wärmeeinleitung in das Gehäuse 7 möglichst schnell und effizient abläuft. Dabei kann zudem eine spezifische Ausformung des integrierten Gehäuses und der Einsatz von Verbundmaterial für das Gehäuse zu einer besseren Wärmeleitfähigkeit führen. Alternativ kann in einer beispielhaften Ausführungsform die Nutzung von thermischen Effekten aus der Brennstoffzelle 2, insbesondere einem Stack zum Aufwärmen oder Abkühlen des integrierten Gehäuses 7 verwendet werden. Zudem kann die Aktorik des Dosierventils 6 als Wärmequelle verwendet werden und wirkt ähnlich dem Antrieb 47 in vorteilhafter Weise.

Der Verdichterraum 30 des Rezirkulationsgebläses 8 steht dabei über die Gas-Auslassöffnung 16 und/oder den ersten Zulauf 28 mit einem Ansaugbereich 11 der Strahlpumpe 4 fluidisch in Verbindung. Dabei ist der erste Zulauf 28 derart ausgebildet, dass dieser als ein integrierter Strömungskanal 41 im Gehäuse 7 ausgebildet ist, wobei dieser eine Krümmung 43 ausbildet. Die Krümmung 43 ist dabei derart strömungsoptimiert ausgebildet, dass die Reibungsverluste zwischen dem gasförmigen Medium und dem integrierten Strömungskanal 41 möglichst gering gehalten werden können. Des Weiteren kann die Drall-Energie und/oder kinetische Energie, mit der das gasförmige Medium aufgrund des Durchlaufens des Verdichterraums 30 im Rezirkulationsgebläse 8 beaufschlagt ist, möglichst zumindest nahezu ohne Verluste beim Durchströmen der Krümmung 43 des integrierten Strömungskanals 41 aufrechterhalten werden. Somit kann ein hoher Wirkungsgrad des Förderaggregats 3 herbeigeführt werden.

Die Strahlpumpe 4 weist dabei in einer Strömungsrichtung VIII, die insbesondere entlang ihrer Längsachse 50 verläuft, den Ansaugbereich 11, ein Mischrohr 13 und einen konisch verlaufenden Diffusor-Bereich 15 sowie einen Auslass-Krümmer 17 auf, wobei dieser mit der zweiten Verbindungsleitung 25 verbunden ist. Innerhalb der Strahlpumpe 4 findet dabei ein sogenannter Strahlpumpeneffekt statt. Dazu strömt durch den zweiten Zulauf 36 von außerhalb des Förderaggregats 3 das gasförmige Treibmedium, insbesondere H₂, in das Dosierventil 6 ein, insbesondere vom Tank 42. Das Treibmedium wird nun mittels eines Öffnens des Dosierventils 6, insbesondere unter hohem Druck, in den Ansaugbereich 11 eingebracht. Dabei strömt das gasförmige Treibmedium in Richtung der Strömungsrichtung VIII. Das aus dem zweiten Zulauf 36 in den Ansaugbereich 11 strömende und als Treibmedium dienende H₂ weist eine Druckdifferenz zum Rezirkulationsmedium auf, das aus dem ersten Zulauf 28 in den Ansaugbereich 11 einströmt, wobei das Treibmedium insbesondere unter einem höheren Druck von mindestens 10 bar steht. Damit sich der Strahlpumpeneffekt einstellt wird das Rezirkulationsmedium mit einem geringen Druck und einem geringen Massenstrom in den in den Ansaugbereich 11 der Strahlpumpe 4 gefördert. Dabei strömt das Treibmedium mit der beschriebenen Druckdifferenz und einer hohen Geschwindigkeit, die insbesondere Nahe der Schallgeschwindigkeit liegt, durch das Dosierventil 6 in den Ansaugbereich 11 ein. Dabei trifft das Treibmedium auf das Rezirkulationsmedium, das sich bereits im Ansaugbereich 11 befindet. Aufgrund der hohen Geschwindigkeits- und/oder Druck-Differenz zwischen dem Treibmediums und dem Rezirkulationsmedium wird eine innere Reibung und Turbulenzen zwischen den Medien erzeugt. Dabei entsteht eine Scherspannung in der Grenzschicht zwischen dem schnellen Treibmedium und dem wesentlich langsameren Rezirkulationsmedium. Diese Spannung bewirkt eine Impulsübertragung, wobei das Rezirkulationsmedium beschleunigt und mitgerissen wird. Die Mischung geschieht nach dem Prinzip der Impulserhaltung. Dabei wird das Rezirkulationsmedium in der Strömungsrichtung VI beschleunigt und es entsteht auch für das Rezirkulationsmedium ein Druckabfall, wodurch eine Saugwirkung einsetzt und somit weiteres Rezirkulationsmedium aus dem Bereich des ersten Zulaufs 28 und/oder des Rezirkulationsgebläses 8 nachgefördert wird. Durch eine Änderung und/oder Regulierung der Öffnungsdauer und der Öffnungsfrequenz des Dosierventils 6 kann eine Förderrate des Rezirkulationsmediums reguliert werden und auf den jeweiligen Bedarf des gesamten Brennstoffzellen-Systems 1 je nach Betriebszustand und Betriebsanforderungen angepasst werden.

In **Fig.** 2 ist zudem gezeigt, dass im Bereich des Diffusor-Bereichs 15 und/oder des Auslass-Krümmers 17 ein Niederdrucksensor 45 platzsparend und/oder integriert im Gehäuse 7 angeordnet ist, wodurch weniger Bauraum erforderlich ist. Zudem ist gezeigt, dass das Rezirkulationsgebläse 8 und die Strahlpumpe 4 derart zueinander im gemeinsamen Gehäuse 7 angeordnet sind, dass die Drehachse 48 des Verdichterrads 12 des Rezirkulationsgebläses 8 zumindest annähernd senkrecht zu der Längsachse 50 der Strahlpumpe 4 verläuft.

**Fig.** 3 zeigt eine perspektivische Schnittansicht A-A des Förderaggregats 3 mit dem Rezirkulationsgebläse 8, der Strahlpumpe 4 und dem Dosierventil 6. Dabei ist gezeigt, dass das Förderaggregat 3 zusätzlich zum Bauteil Strahlpumpe 4 als weitere Bauteile das Rezirkulationsgebläse 8, das Dosierventil 6 und den Abscheider 10 aufweist, wobei die Strömungskonturen der Bauteile 4, 6, 8 für das gasförmige Medium und/oder die Bauteile 4, 6, 8 zumindest nahezu vollständig in dem gemeinsamen Gehäuse 7 angeordnet sind. In einer beispielhaften Ausführungsform kann das Gehäuse 7 dabei zweiteilig, dreiteilig oder mehrteilig ausgeführt sein. Dabei sind die einzelnen Teile insbesondere aus dem gleichen Material und/oder diese weisen einen zumindest annähernd gleichen Wärmeausdehnungskoeffizienten auf.

Zudem ist in **Fig.** 3 gezeigt, dass das Dosierventil 6 einen Mitteldrucksensor 57 aufweist, der insbesondere den Druck des aus dem Tank 42 kommenden über den zweiten Zulauf 36 in das Dosierventil 6 einströmenden Treibmediums erfasst. Weiterhin ist gezeigt, dass das Rezirkulationsgebläse 8 die Gas-Einlassöffnung 14 und die Gas-Auslassöffnung 16 aufweist, sowie das Verdichterrad 12. Das Verdichterrad 12 bildet dabei jeweils zwischen zwei Schaufelblättern jeweils eine Förderzelle 20 aus, wobei die Förderzellen 20 nach außen auf der der Drehachse 48 abgewandten Seite einen äußeren Begrenzungsring 39 aufweist. Dabei ist ein Abscheideraum 34 zwischen dem Gehäuse 7 und dem äußeren Begrenzungsring 39 des Verdichterrads 12 ausgebildet. In den die schweren Bestandteile beispielsweise mittels des Zentrifugalprinzips aufgrund Ihrer hohen Maße abgeschieden und/oder gesammelt werden. Des Weiteren ist gezeigt, dass der Abscheider 10, insbesondere der Sammelbehälter 31 des Abscheiders 10, zumindest mittelbar fluidisch mit dem Verdichterraum 30 und/oder dem Abscheideraum 34 des Rezirkulationsgebläse 8 verbunden ist, wobei die Verbindung mittels eines zumindest annähernd senkrecht zur Drehachse 48 verlaufenden Abführungs-Kanals 46 erfolgt. Die schweren Bestandteile, wie beispielsweise H₂O und/oder N₂, des gasförmigen Mediums werden vom Rezirkulationsgebläse 8, insbesondere vom Abscheideraum 34, in den Abscheider 10 und/oder den Sammelbehälter 31 mittels des Zentrifugalprinzips und/oder des Gravitationsprinzips und/oder eines Druckunterschieds geleitet. Der Sammelbehälter 31 weist zudem eine Ablaufbohrung 52 auf, wobei ein Ablassen von H₂O und/oder N₂ aus dem Sammelbehälter 31 über die Ablaufbohrung 52 mittels des Abführventils 44 gesteuert werden kann. Die Ablaufbohrung 52 ist dabei an Ihrem dem Sammelbehälter 31 abgewandten Ende mittels eines Ventilsitzes 53 eines Schließelement 54 verschlossen, wobei ein Öffnen der Ablaufbohrung 52 und somit des Abführventils 44 mittels eines elektrischen Aktors 27 erfolgt. Dabei wird der Ventilsitz 53 über ein Wegbewegen des Schließelements 54 geöffnet, wobei das Schließelement 54 über den Aktor 27 erfolgt. Der Aktor 27 kann zudem als ein elektromagnetischer Aktor 27 ausgeführt sein. Bei geöffnetem Ventilsitz 53 und/oder geöffnetem Abführventil 44 strömt das gasförmige Medium, insbesondere die schweren Bestandteile, weiter in einen Bereich, der als ein Anschluss 26 an eine weiterführende Leitung dient, die beispielsweise die schweren Bestandteile zurück in einen Kathodenbereich 40 der Brennstoffzelle 2 fördert. Alternativ können die schweren Bestandteile jedoch auch in die Umgebung abgelassen werden.

Zudem ist in **Fig.** 3 gezeigt, dass der sich im gemeinsamen Gehäuse 7 befindliche Sammelbehälter 31 mittels einer Verschlussschraube 56 verschlossen ist, wobei sich zur besseren Kapselung des Sammelbehälters 31 ein Dichtelement 55 zwischen dem Gehäuse 7 und der Verschlussschraube 56. Die Verwendung der Verschlussschraube 56 bietet fertigungstechnische Vorteile und Vorteile bei den Herstellkosten. Weiterhin kann in einer beispielhaften Ausführungsform der Niederdrucksensor 45 und/oder der Mitteldrucksensor 57 Teil der ersten Sensorik 22 und/oder der zweiten Sensorik 24 sein.

In einer beispielhaften Ausführungsform des Förderaggregats 3 kann ausschließlich mittels des Abführventils 44 ein Ablassen von H₂O aus dem gesamten Anodenkreislauf 9 erfolgen. In einer weiteren beispielhaften Ausführungsform des Förderaggregats 3 kann ausschließlich mittels des Abführventils 44 ein Ablassen von N₂ und/oder H₂, aus dem gesamten Anodenkreislauf 9 erfolgen. Weitere Drainventile und/oder Purgeventile müssen somit nicht im Anodenkreislauf 9 vorgesehen werden, wodurch sich die Kosten des Förderaggregats 3 reduzieren lassen.

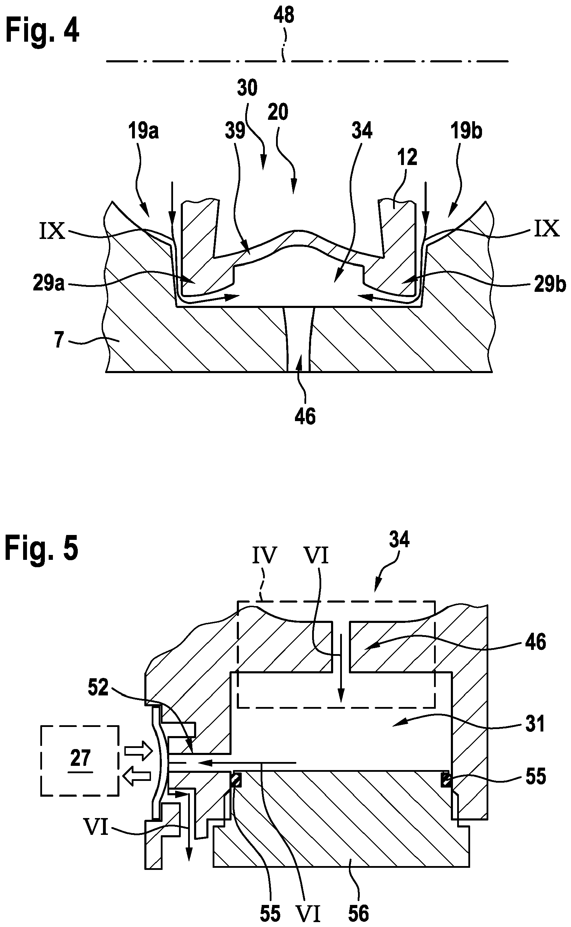

In **Fig.** 4 ist ein in **Fig.** 2 mit II bezeichnete Ausschnitt des Verdichterraums 30 des Rezirkulationsgebläses 8 mit dem Verdichterrad 12 gezeigt. Dabei ist gezeigt, dass das Verdichterrad 12 den umlaufenden äußeren Begrenzungsring 39 aufweist, der rotationssymmetrisch zu der Drehachse 48 des Verdichterrads 12 verläuft. Dabei befindet sich auf der der Drehachse 48 abgewandten Seite des Verdichterrads 12 im Gehäuse 7 des Rezirkulationsgebläses 8 und/oder des Förderaggregats 3 ein zumindest teilweise, insbesondere von dem mindestens einen Seitenkanal 19, gekapselter Abscheideraum 34 und/oder der Abführungs-Kanal 46. Dabei ist das Verdichterrad 12 gezeigt, das im Bereich des äußeren Begrenzungsrings 39 mindestens einen außenliegenden umlaufenden Ringbund 29a, b aufweist. Dieser außenliegende Ringbund 29a, b verläuft radial zur Drehachse 48 und auf der der Drehachse 48 abgewandten Seite des äußeren Begrenzungsrings 39. Dabei steht der mindestens eine außenliegende Ringbund 29a, b axial und/oder radial zur Symmetrieachse 49 mit dem Gehäuse-Oberteil 7 und/oder dem Gehäuse-Unterteil 8 des Gehäuses 7 zumindest nahezu in Anlage und/oder bildet mit diesem ein geringes Spaltmaß aus, das vom gasförmigen Medium zumindest nahezu nicht überwunden werden kann. Indem sich zwischen dem Verdichterrad 12 mit dem mindestens eine außenliegenden umlaufenden Ringbund 29a, b und dem Gehäuse 7 ein geringes Spaltmaß ausbilden kann, kann eine zumindest teilweise Kapselung des mindestens einen Seitenkanals 19 vom Abscheideraum 34 erreicht werden. Der Abscheideraum 34 zumindest teilweise umlaufend um die Drehachse 48 zwischen dem Gehäuse 7 und dem äußeren Begrenzungsring 39 ausgebildet ist. Bei zunehmender Rotationsgeschwindigkeit des Verdichterrad 12 werden die auf die schweren Bestandteile des gasförmigen Mediums im Verdichterraum 30 wirkenden Kräfte, insbesondere eine Zentrifugalkraft und/oder eine Fliehkraft, derart groß, dass die schweren Bestandteile in einer Strömungsrichtung IX vom jeweiligen Seitenkanal 19a, b und/oder dem Verdichterraum 30 zwischen dem jeweiligen Ringbund 29a, b und dem Gehäuse 7 hindurch in den Abscheideraum 34 strömt. Die schweren Bestandteile werden somit aus dem Bereich des mindestens einen Seitenkanals 19 und der Förderzelle 20 abgeleitet und im Bereich des Abscheideraums 34 gesammelt. Somit wird der Bestandteil H₂O und/oder der Bestandteil N₂ vom gasförmigen Medium im Rezirkulationsgebläse 8 abgeschieden, wobei die Abscheidung insbesondere mittels des Zentrifugalprinzips im Rezirkulationsgebläse 8 erfolgt. Bei diesen schweren Bestandteilen des gasförmigen Mediums kann es sich beispielsweise um unerwünschte Abfallprodukt und/oder Nebenprodukte aus dem Betrieb des Brennstoffzellen-Systems 1 handeln, wie beispielsweise N₂ und/oder H₂ und/oder Schmutzpartikel. Durch das Abführen der schweren Bestandteile kann die Förder- und Verdichtungswirkung des Förderaggregats 3 erhöht werden, da der Anteil des zu fördernden gasförmigen Medium, insbesondere H₂, der für die Stromerzeugung in der Brennstoffzelle 2 benötigt wird, in der Förderzelle 20 und dem mindestens einen Seitenkanal 19 erhöht wird. Dadurch lässt sich der Wirkungsgrad des Förderaggregats 3 erhöhen, da keine für den Betrieb unerwünschten schweren Bestandteile mitgefördert werden müssen.

Des Weiteren ist in **Fig.** 4 gezeigt, dass der Abführungs-Kanal 46 im bestimmungsgemäßen Gebrauch, in einer niedrigen geodätischen Höhe am Rezirkulationsgebläse 8, insbesondere am Abscheideraum 34, angeordnet ist.

**Fig.** 5 zeigt einen in Figur 3 mit III bezeichneten Ausschnitt des Abscheiders 10. Dabei ist gezeigt, dass der Abscheideraum 34 über den Abführungs-Kanal 46 zumindest mittelbar fluidisch mit dem Sammelbehälter 31 des Abscheiders 10 verbunden ist. Dabei können der Abscheideraum 34 und/oder der Abführungs-Kanal 46 ein erhöhtes Druckniveau zum Sammelbehälter 31 des Abscheiders 10 ausbilden und wobei eine Ableitung von H₂O und/oder N₂ aus dem Rezirkulationsgebläse 8 in den Abscheider 10 in der Strömungsrichtung VI erfolgt. Die Ablaufbohrung 52 ist dabei im bestimmungsgemäßen Gebrauch, in einer niedrigen geodätischen Höhe in dem Sammelbehälter 31 angeordnet ist. Die im Sammelbehälter 31 gesammelten schweren Bestandteile des gasförmigen Mediums werden über die Ablaufbohrung 52 in einen Bereich außerhalb des Förderaggregats 3 abgeführt. Zum Öffnen oder Schließen der Ablaufbohrung 52 und somit des Sammelbehälters 31 des Abscheiders 10 wird der Aktor 27 betätigt, wobei dieser Aktor 27 Teil des Abführventils 44 ist.

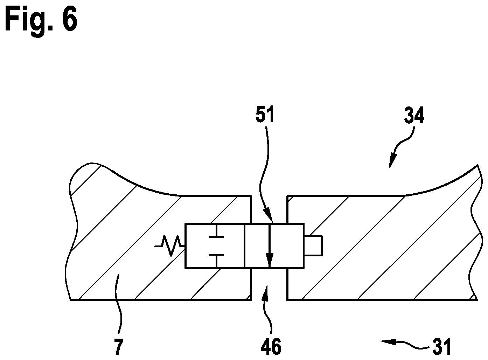

In **Fig.** 6 ist gezeigt, dass sich das Absperrventil 51 in dem Abführungskanal 46 befindet, wobei sich die zumindest mittelbare fluidische Verbindung zwischen dem Rezirkulationsgebläse 8, insbesondere dem Abscheideraum 34, und dem Abscheider 10, insbesondere dem mittels des Absperrventils 51 öffnen oder schließen lässt.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Förderaggregat (3) für einen Anodenkreislauf (9) eines Brennstoffzellen-Systems (1), zur Förderung eines gasförmigen Mediums, insbesondere Wasserstoff, aus einem Anodenbereich (38) einer Brennstoffzelle (2), wobei das Förderaggregat (3) zumindest ein Rezirkulationsgebläse (8) umfasst, wobei das Förderaggregat (3) mittels wenigstens einer Verbindungsleitung (23) mit dem Ausgang des Anodenbereich (38) zumindest mittelbar fluidisch verbunden ist und wobei das Förderaggregat (3) mittels einer weiteren Verbindungsleitung (25) mit dem Eingang des Anodenbereichs (38) fluidisch verbunden ist, **dadurch gekennzeichnet, dass** das Förderaggregat (3) zusätzlich zum Bauteil Rezirkulationsgebläse (8) als weitere Bauteile eine Strahlpumpe (4), ein Dosierventil (6) und einen Abscheider (10) aufweist, wobei die Strömungskonturen der Bauteile (4, 6, 8, 10) für das gasförmige Medium zumindest nahezu vollständig in einem gemeinsamen Gehäuse (7) angeordnet sind und wobei das Rezirkulationsgebläse (8) ein Verdichterrad (12) mit einem umlaufenden äußeren Begrenzungsring (39) aufweist, der rotationssymmetrisch zu einer Drehachse (48) des Verdichterrads (12) verläuft und wobei sich auf der der Drehachse (48) abgewandten Seite des Verdichterrads (12) im Gehäuse (7) des Förderaggregats (3) ein zumindest teilweise gekapselter Abscheideraum (34) befindet.

2. Förderaggregat (3) nach Anspruch 1, **dadurch gekennzeichnet, dass** der Bestandteil H₂O und/oder der Bestandteil N₂ vom gasförmigen Medium im Rezirkulationsgebläse (8) abgeschieden wird, wobei die Abscheidung insbesondere mittels des Zentrifugalprinzips im Rezirkulationsgebläse (8) erfolgt.

3. Förderaggregat (3) nach Anspruch 2, **dadurch gekennzeichnet, dass** die Bestandteile H₂O und/oder N₂ des gasförmigen Mediums vom Rezirkulationsgebläse (8) in den Abscheider (10) mittels des Zentrifugalprinzips und/oder des Gravitationsprinzips und/oder eines Druckunterschieds geleitet werden.

4. Förderaggregat (3) nach einem der Ansprüche 1 bis 3, **dadurch gekennzeichnet, dass** das Rezirkulationsgebläse (8) und die Strahlpumpe (4) derart zueinander im gemeinsamen Gehäuse (7) angeordnet sind, dass die Drehachse (48) des Verdichterrads (12) des Rezirkulationsgebläses (8) zumindest annähernd senkrecht zu einer Längsachse (50) der Strahlpumpe (4) verläuft.

5. Förderaggregat (3) nach einem der Ansprüche 1 bis 4, **dadurch gekennzeichnet, dass** der Abscheider (10), insbesondere ein Sammelbehälter (31) des Abscheiders (10), zumindest mittelbar fluidisch mit einem Verdichterraum (30) und/oder dem Abscheideraum (34) des Rezirkulationsgebläse (8) verbunden ist, wobei die Verbindung mittels eines zumindest annähernd senkrecht zur Drehachse (48) verlaufenden Abführungs-Kanals (46) erfolgt.

6. Förderaggregat (3) nach Anspruch 5, **dadurch gekennzeichnet, dass** der Abführungs-Kanal (46) im bestimmungsgemäßen Gebrauch, in einer niedrigen geodätischen Höhe am Rezirkulationsgebläse (8), insbesondere am Abscheideraum (34), angeordnet ist.

7. Förderaggregat (3) nach Anspruch 5, **dadurch gekennzeichnet, dass** der Sammelbehälter (31) eine Ablaufbohrung (52) aufweist, wobei ein Ablassen von H₂O und/oder N₂ aus dem Sammelbehälter (31) über die Ablaufbohrung (52) mittels eines Abführventils (44) gesteuert werden kann.

8. Förderaggregat (3) nach Anspruch 7, **dadurch gekennzeichnet, dass** die Ablaufbohrung (52) in einer im bestimmungsgemäßen Gebrauch, niedrigen geodätischen Höhe in dem Sammelbehälter (31) angeordnet ist.

9. Förderaggregat (3) nach Anspruch 7, **dadurch gekennzeichnet, dass** ausschließlich mittels des Abführventils (44) ein Ablassen von H₂O aus dem gesamten Anodenkreislauf (9) erfolgt.

10. Förderaggregat (3) nach Anspruch 7, **dadurch gekennzeichnet, dass** ausschließlich mittels des Abführventils (44) ein Ablassen von N₂ und/oder H₂, aus dem gesamten Anodenkreislauf (9) erfolgt.

11. Förderaggregat (3) nach Anspruch 5, **dadurch gekennzeichnet, dass** sich ein Absperrventil (51) in dem Abführungskanal (46) befindet, wobei sich die zumindest mittelbare fluidische Verbindung zwischen dem Rezirkulationsgebläse (8) und dem Abscheider (10) mittels des Absperrventils (51) öffnen oder schließen lässt.

12. Förderaggregat (3) nach einem der Ansprüche 9 bis 11, **dadurch gekennzeichnet, dass** eine erste Sensorik (22) und/oder eine zweite Sensorik (24) mit einer Steuereinrichtung (21) verbunden sind, wobei insbesondere die erste Sensorik (22) kontinuierlich Parameter des Abscheiders (10) erfasst und die zweite Sensorik (24) kontinuierlich Parameter des Rezirkulationsgebläses (8) erfasst, wobei die Steuereinrichtung (21), insbesondere auf Basis der von der Sensorik (22, 24) erfassten Parameter, das Öffnen und Schließen des Abführventils (44) und/oder des Absperrventils (51) steuert.

13. Verwendung des Förderaggregats (3) nach einem der Ansprüche 1 bis 12, in einem Brennstoffzellen-System (1) eines Fahrzeugs zur elektrischen Energieversorgung von Fahrantrieb und/oder Nebenverbrauchern.

## Claims

1. Delivery unit (3) for an anode circuit (9) of a fuel cell system (1) for delivering a gaseous medium, in particular hydrogen, out of an anode region (38) of a fuel cell (2), wherein the delivery unit (3) comprises at least one recirculation blower (8), wherein the delivery unit (3) is at least indirectly fluidically connected by means of at least one connecting line (23) to the outlet of the anode region (38), and wherein the delivery unit (3) is fluidically connected by means of a further connecting line (25) to the inlet of the anode region (38), **characterized in that** the delivery unit (3) has a jet pump (4), a dosing valve (6) and a separator (10) as further components in addition to the component of recirculation blower (8), wherein the flow contours of the components (4, 6, 8, 10) for the gaseous medium are arranged at least approximately entirely in a common housing (7), and wherein the recirculation blower (8) has a compressor wheel (12) with an encircling outer delimiting ring (39) which runs rotationally symmetrically with respect to an axis of rotation (48) of the compressor wheel (12), and wherein an at least partially encapsulated separation space (34) is situated in the housing (7) of the delivery unit (3) on that side of the compressor wheel (12) which is averted from the axis of rotation (48).

2. Delivery unit (3) according to Claim 1, **characterized in that** the constituent H₂O and/or the constituent N₂ of the gaseous medium is separated off in the recirculation blower (8), wherein the separation is performed in particular by means of the centrifugal principle in the recirculation blower (8).

3. Delivery unit (3) according to Claim 2, **characterized in that** the constituents H₂O and/or N₂ of the gaseous medium are conducted from the recirculation blower (8) into the separator (10) by means of the centrifugal principle and/or the gravitational principle and/or a pressure difference.

4. Delivery unit (3) according to any one of Claims 1 to 3, **characterized in that** the recirculation blower (8) and the jet pump (4) are arranged relative to one another in the common housing (7) such that the axis of rotation (48) of the compressor wheel (12) of the recirculation blower (8) runs at least approximately perpendicular to a longitudinal axis (50) of the jet pump (4).

5. Delivery unit (3) according to any one of Claims 1 to 4, **characterized in that** the separator (10), in particular a collecting vessel (31) of the separator (10), is fluidically connected at least indirectly to a compressor space (30) and/or to the separation space (34) of the recirculation blower (8), wherein the connection is realized by means of a discharge channel (46) which runs at least approximately perpendicular to the axis of rotation (48) .

6. Delivery unit (3) according to Claim 5, **characterized in that** the discharge channel (46) is, in intended use, arranged at a low geodetic height at the recirculation blower (8), in particular at the separation space (34).

7. Delivery unit (3) according to Claim 5, **characterized in that** the collecting vessel (31) has an outflow bore (52), wherein a discharge of H₂O and/or N₂ out of collecting vessel (31) via the outflow bore (52) can be controlled by means of a discharge valve (44).

8. Delivery unit (3) according to Claim 7, **characterized in that** the outflow bore (52) is arranged in the collecting vessel (31) at a geodetic height that is low in intended use.

9. Delivery unit (3) according to Claim 7, **characterized in that** a discharge of H₂O out of the anode circuit (9) as a whole takes place exclusively by means of the discharge valve (44).

10. Delivery unit (3) according to Claim 7, **characterized in that** a discharge of N₂ and/or H₂ out of the anode circuit (9) as a whole takes place exclusively by means of the discharge valve (44).

11. Delivery unit (3) according to Claim 5, **characterized in that** a shut-off valve (51) is situated in the discharge channel (46), wherein the at least indirect fluidic connection between the recirculation blower (8) and the separator (10) can be opened or closed by means of the shut-off valve (51).

12. Delivery unit (3) according to any one of Claims 9 to 11, **characterized in that** a first sensor arrangement (22) and/or a second sensor arrangement (24) are connected to a control device (21), wherein, in particular, the first sensor arrangement (22) continuously detects parameters of the separator (10) and the second sensor arrangement (24) continuously detects parameters of the recirculation blower (8), wherein the control device (21) controls the opening and closing of the discharge valve (44) and/or of the shut-off valve (51) in particular on the basis of the parameters detected by the sensor arrangement (22, 24).

13. Use of the delivery unit (3) according to any one of Claims 1 to 12 in a fuel cell system (1) of a vehicle for the supply of electrical energy to a traction drive and/or secondary consumers.

## Revendications

1. Ensemble de refoulement (3) pour un circuit anodique (9) d'un système à pile à combustible (1), servant au refoulement d'un milieu gazeux, en particulier d'hydrogène, à partir d'une zone anodique (38) d'une pile à combustible (2), l'ensemble de refoulement (3) comprenant au moins une soufflante de recirculation (8), l'ensemble de refoulement (3) étant relié fluidiquement au moins indirectement à la sortie de la zone anodique (38) à l'aide d'au moins une conduite de liaison (23) et l'ensemble de refoulement (3) étant relié fluidiquement à l'entrée de la zone anodique (38) à l'aide d'une autre conduite de liaison (25), **caractérisé en ce que** l'ensemble de refoulement (3) présente, en plus du composant soufflante de recirculation (8), en tant que composants supplémentaires, une pompe à jet (4), une soupape de dosage (6) et un séparateur (10), les contours d'écoulement des composants (4, 6, 8, 10) pour le milieu gazeux étant disposés au moins pratiquement complètement dans un boîtier commun (7) et la soufflante de recirculation (8) présentant une roue de compresseur (12) dotée d'un anneau de limitation extérieur périphérique (39) qui s'étend suivant une symétrie de révolution par rapport à un axe de rotation (48) de la roue de compresseur (12) et un espace de séparateur (34) au moins partiellement encapsulé se trouvant dans le boîtier (7) de l'ensemble de refoulement (3) sur le côté de la roue de compresseur (12) opposé à l'axe de rotation (48).

2. Ensemble de refoulement (3) selon la revendication 1, **caractérisé en ce que** le composant H₂O et/ou le composant N₂ sont séparés du milieu gazeux dans la soufflante de recirculation (8), la séparation s'effectuant dans la soufflante de recirculation (8) en particulier à l'aide du principe centrifuge.

3. Ensemble de refoulement (3) selon la revendication 2, **caractérisé en ce que** les composants H₂O et/ou N₂ du milieu gazeux sont guidés à partir de la soufflante de recirculation (8) dans le séparateur (10) à l'aide du principe centrifuge et/ou du principe gravitationnel et/ou d'une différence de pression.

4. Ensemble de refoulement (3) selon l'une des revendications 1 à 3, **caractérisé en ce que** la soufflante de recirculation (8) et la pompe à jet (4) sont disposées l'une par rapport à l'autre dans le boîtier commun (7) de telle sorte que l'axe de rotation (48) de la roue de compresseur (12) de la soufflante de recirculation (8) s'étend au moins approximativement perpendiculairement à un axe longitudinal (50) de la pompe à jet (4).

5. Ensemble de refoulement (3) selon l'une des revendications 1 à 4, **caractérisé en ce que** le séparateur (10), en particulier un récipient collecteur (31) du séparateur (10), est relié fluidiquement au moins indirectement à un espace de compresseur (30) et/ou à l'espace de séparateur (34) de la soufflante de recirculation (8), la liaison s'effectuant à l'aide d'un canal d'évacuation (46) s'étendant au moins approximativement perpendiculairement à l'axe de rotation (48).

6. Ensemble de refoulement (3) selon la revendication 5, **caractérisé en ce que** le canal d'évacuation (46), lors de l'utilisation correcte, est disposé à une hauteur géodésique faible au niveau de la soufflante de recirculation (8), en particulier au niveau de l'espace de séparateur (34).

7. Ensemble de refoulement (3) selon la revendication 5, **caractérisé en ce que** le récipient collecteur (31) présente un alésage de sortie (52), une évacuation de H₂O et/ou de N₂ hors du récipient collecteur (31) via l'alésage de sortie (52) pouvant être commandée à l'aide d'une soupape de vidange (44).

8. Ensemble de refoulement (3) selon la revendication 7, **caractérisé en ce que** l'alésage de sortie (52) est disposé dans le récipient collecteur (31) à une hauteur géodésique faible lors de l'utilisation correcte.

9. Ensemble de refoulement (3) selon la revendication 7, **caractérisé en ce qu'**une évacuation de H₂O hors de tout le circuit anodique (9) s'effectue exclusivement à l'aide de la soupape de vidange (44).

10. Ensemble de refoulement (3) selon la revendication 7, **caractérisé en ce qu'**une évacuation de N₂ et/ou de H₂ hors de tout le circuit anodique (9) s'effectue exclusivement à l'aide de la soupape de vidange (44).

11. Ensemble de refoulement (3) selon la revendication 5, **caractérisé en ce qu'**une soupape d'arrêt (51) se trouve dans le canal de sortie (46), la liaison fluidique au moins indirecte entre la soufflante de recirculation (8) et le séparateur (10) pouvant être ouverte ou fermée à l'aide de la soupape d'arrêt (51).

12. Ensemble de refoulement (3) selon l'une des revendications 9 à 11, **caractérisé en ce qu'**un premier système de capteurs (22) et/ou un deuxième système de capteurs (24) sont reliés à un dispositif de commande (21), en particulier le premier dispositif de capteurs (22) détectant en continu des paramètres du séparateur (10) et le deuxième système de capteurs (24) détectant en continu des paramètres de la soufflante de recirculation (8), le dispositif de commande (21) commandant, en particulier sur la base des paramètres détectés par le premier système de capteurs (22, 24), l'ouverture et la fermeture de la soupape de sortie (44) et/ou de la soupape d'arrêt (51).

13. Utilisation de l'ensemble de refoulement (3) selon l'une des revendications 1 à 12, dans un système à pile à combustible (1) d'un véhicule servant à l'alimentation en énergie électrique du système d'entraînement et/ou de consommateurs auxiliaires.
